# EUROPEAN PATENT SPECIFICATION

(11) **EP 1 157 231 B1**
(45) Date of publication and mention of the grant of the patent: **11.06.2003**
(21) Application number: 00906182.1
(22) Date of filing: 29.02.2000
(51) Int. Cl.: F16K 31/68, G05D 23/12

(54) **THERMOSTATIC VALVE TOP PART**
THERMOSTAT KOPFTEIL EINES VENTILS
PARTIE SUPERIEURE D'UNE SOUPAPE THERMOSTATIQUE

(30) Priority: 02.03.1999 DE 19909096
(43) Date of publication of application: 28.11.2001
(73) Proprietor: Danfoss A/S, 6430 Nordborg (DK)
(72) Inventor: FREDERIKSEN, Bjarne, DK-8600 Silkeborg (DK)
(86) International application number: DK0000083
(87) International publication number: WO00052372

(56) References cited:
- DE-A- 19 534 186
- DE-C- 4 319 814

## Description

The invention concerns a thermostatic valve top part with a housing, a twist handle and a thermostatic element, which acts upon an operating element via a connecting element, the thermostatic element being axially displaceable in relation to the housing on a turning of the twist handle.

A thermostatic valve top part of this kind is known from DE 31 53 654 C2. In this connection, the thermostatic element is fixed in the twist handle. The twist handle is connected with the housing via a screw thread. When now the twist handle is turned, the axial position of the twist handle relative to the housing, and synchronously also the axial position of the thermostatic element in relation to the operating element, is changed. Thus, the desired value to be controlled by the thermostatic element can be changed and set.

The thermostatic element used for the invention is an ordinary thermostatic element, which is filled with a material, which expands on temperature increases. The thermostatic element has a bellows-shaped area, into which the connecting element projects. When the thermostatic element expands, the connecting element is pushed outwards, which does in many cases lead to an increased throttling of the controlled radiator valve. Similarly, also valves can be controlled, which are used for other heating systems, for example floor heating systems.

When a thermostatic valve top part must be adjusted to change the desired value of the room temperature, a change of the axial length of the thermostatic valve top part occurs. This change of the length is relatively small. However, it may be disturbing, when in crowded rooms you wish to place furniture or other household goods in front of the thermostatic valve top part. Another problem field occurs, when it is desired to provide the thermostatic valve top part with additional devices, for which cables must be laid over the changing distance. When adjusting, these cables are then bent, which is often not wanted.

In DE 33 37 426 A1 it has therefore been proposed to arrange the twist handle so in relation to the housing that it cannot be axially displaced. In this case also the thermostatic element is arranged to be stationary. The adjustment of the desired value then occurs in that the twist handle acts upon an adjustment device via a cone wheel gear. In this connection, however, it is a condition that the rotation axis of the twist handle in relation to the movement direction of the connecting element is tilted by a large angle of more than 30°. Thus, the mounting opportunities of this thermostatic valve top part are substantially reduced.

The document DE 4 319 814 shows a thermostatic valve having the features of the preamble of claim 1.

The invention is based on the task of improving the arranging freedom of the thermostatic valve top part.

In a thermostatic valve top part of the kind mentioned in the introduction, this task is solved in that the twist handle and thermostatic element are configured such that, on a rotation of the twist handle the thermostatic element is axially displaceable also in relation to the twist handle.

This does away with the procedure usual until now, in which a fixed coordination between the axial position of the twist handle and the axial position of the thermostatic element has always existed. It is permitted that the axial position of the thermostatic element also changes in the twist handle or relative to the twist handle. This gives additional opportunities for the control of the movement of the thermostatic element and thus of the setting of the desired value. The arranging freedom in connection with the drafting and design of the thermostatic valve top part is thus increased.

In this connection it is particularly preferred that the twist handle and the housing are fixed in relation to each other in the axial direction. Therefore, a rotation of the housing will not change the axial length of the thermostatic valve top part. This offers a number of advantages. Firstly, it is sufficient, when room is available for the mounting of the thermostatic valve top part. Further, it is simpler to close a gap, which occurs between the housing and the twist handle, as this gap does not change on a rotation of the twist handle in relation to the housing. Finally, it is possible, if required, to axially fix elements, for example drives and sensors, on the twist handle and to connect them with the housing via cables, without risking that these cables are stressed by bending because of changes of the axial length of the thermostatic valve top part. Finally, it is also possible to give the thermostatic element a larger lift per rotation angle, so that a similar change of the desired value can be effected with a smaller rotation of the twist handle. Until now, this was only possible to a limited extent, as with this embodiment the axial length change of the thermostatic valve top part on a rotation over the total permissible angle area would no longer be tolerable.

In a preferred embodiment, the thermostatic element is inserted in a transport element, which is part of a drive device. The thermostatic element can only stand a limited mechanical load. Forces acting upon the thermostatic element from the outside may in some cases lead to a pressure increase on the inside, which simulates a temperature increase, although a real temperature increase has not occurred. Until now, this has been uncritical, as the thermostatic element was securely held in the handle and the axial positioning was made by means of the handle. When now this solution is abandoned, the transport element can be used to ensure that the thermostatic element is still protected. So to say, the transport element forms a "cage" or a protection cover for the thermostatic element, which catches and absorbs external forces, so that as usual the thermostatic element can practically react only to temperature changes.

In a preferred embodiment it is provided that several fingers project radially outwards from the thermostatic element, said fingers meshing with spiral shaped grooves on the twist handle. Thus, the fingers form part of a thread, which cooperates with the other part of the thread, namely the spiral shaped groove. The design of this thread part as fingers offers several advantages. Firstly, the surface, with which thread parts bear on each other, is relatively small. This reduces the frictional wear and thus permits a relatively fingertip easy turning of the twist handle, although it has to effect the axial displacement of the thermostatic element. Finally, in this way it is also possible to make a distortion protection for the thermostatic element. Between the individual fingers torque supports can then be provided, which prevent a turning of the thermostatic element in relation to the housing. The fingers can be arranged direct on the thermostatic element. However, it is better to connect them with the transport element.

In this connection it is particularly preferred that the fingers are guided through substantially axially extending slots in the housing. The sidewalls of the slots then form the torque supports mentioned. The support itself forms an axial guide, so that the orientation of the thermostatic element can always be maintained in a reliable way.

It is also advantageous that the fingers are designed to be rotation unsymmetrical. This embodiment causes that the thermostatic element, the twist handle and if required also the housing can only be mounted in one single, predetermined angle orientation in relation to each other.

Thus, the adjustment can be simplified in connection with mass production. When all parts are mounted at a predetermined orientation in relation to each other, only the component tolerances are important, but not the additional tolerances, which are caused by different mounting of the parts. Thus, with relatively little effort, the same correlation between the temperature and the angle position of the twist handle can be adjusted on all thermostatic valve top parts without requiring an excessively large adjustment length.

In this connection it is preferred that the centres of the fingers are placed at regular distances in the circumferential direction, the fingers, however, having different widths. When the centres of the fingers are distributed at regular distances in the circumferential direction, these centres have approximately the same mutual distances. As the power flow to the thermostatic element can be referred in sufficient proximity to the centres of the fingers, this causes a rotation symmetrical load of the thermostatic element, so that distortions due to irregular loads are substantially avoided. The rotation unsymmetrical embodiment is then obtained by means of the different finger widths.

In this connection it is preferred that at least three fingers are provided. This keeps the risk small that a load on only two oppositely arranged fingers can provoke a distortion of the thermostatic element in the direction of an oval cross section. With three or more fingers, this risk does no longer exist.

Preferably, the fingers are connected with each other in the circumferential direction. This gives an improved rigidity. If the fingers were not connected with each other, a situation could occur, in which the fingers could bend inwards, which again could influence the function of the fingers or the function of the thermostatic element.

Advantageously, the front side of the transport element turning away from the valve has a free space with an annular limitation. Usually, the front side of the thermostatic element has an opening, through which the filling is inserted. This filling is normally closed by means of a ball or another closure element, however, in many cases, it cannot be ensured that this closure element does not project from the front side of the thermostatic element. When a transport element is used, situations might be imagined in which the transport element presses against the ball, thus causing the opening to open again. When, however, a free space for the ball is provided, this situation cannot occur.

In a preferred embodiment, the free space can be a hole. Thus, the transport element only holds the thermostatic element in the area of its circumferential edge on its front side. In the middle there is a large recess, which then forms the free space.

In an alternative embodiment it may be provided that the free space is formed by a circumferential groove in the front side. In both cases, the orientation of the thermostatic element in relation to the transport element is insignificant. Both can be assembled at random angle position.

Preferably, an adjustment device is arranged between the thermostatic element and the operating element, which device changes the active connection between the thermostatic element and the operating element. This gives a second opportunity of changing the desired temperature at the thermostatic valve top part. The twist handle provides the first opportunity. Now, for example, the twist handle can be set at a predetermined desired temperature. By means of the adjustment device, for example, a night setback can be effected, which reduces this desired temperature by 1 to 5°C. An adjustment of the twist handle is not required. The adjustment can be time controlled or be effected by external signals. This gives the opportunity of local changes of the desired value, so that the total heating system of a building does not have to be controlled in the same way.

Advantageously, the adjustment device changes the length of the connecting element. This measure is relatively easily realised. When the connecting element gets longer, the expansion of the thermostatic element at unchanged temperature will lead to an earlier throttling of the valve.

It is also advantageous that the adjustment device is connected with a control device, which is detachably fitted on the side of the housing. The control device can be dismounted, so that the thermostatic valve top part functions exactly like a normal thermostatic valve top part. In the dismounted state the control device can, for example, be programmed, or the batteries can be changed, which is easier in the dismounted state, as the control device is then more easily accessible. In the mounted state the control device takes up no space, that is, the thermostatic valve top part is not extended in the axial direction. However, next to the thermostatic valve top part, there is usually enough space available, which could otherwise not be used.

In this connection it is preferred that the adjustment device has a toothed gearing, whose inlet gear wheel, supported in the housing, projects from the housing into the control device. Then, the control device can effect the change of the adjustment device by means of a motor. The fact that the inlet gear wheel is supported in the housing of the thermostatic valve top part and projects into the control device causes that the gear wheel can have a relatively large diameter. The drive motor in the control device can then work with a relatively small driving torque.

In the following the invention is described on the basis of a preferred embodiment in connection with the drawings, showing:
- Fig. 1: a thermostatic valve top part in a position for maximum desired value
- Fig. 2: the thermostatic valve top part in the position for minimum desired value
- Fig. 3: a modified embodiment in a sectional view III-III according to Fig. 4
- Fig. 4: a sectional view in a section IV-IV according to Fig. 3

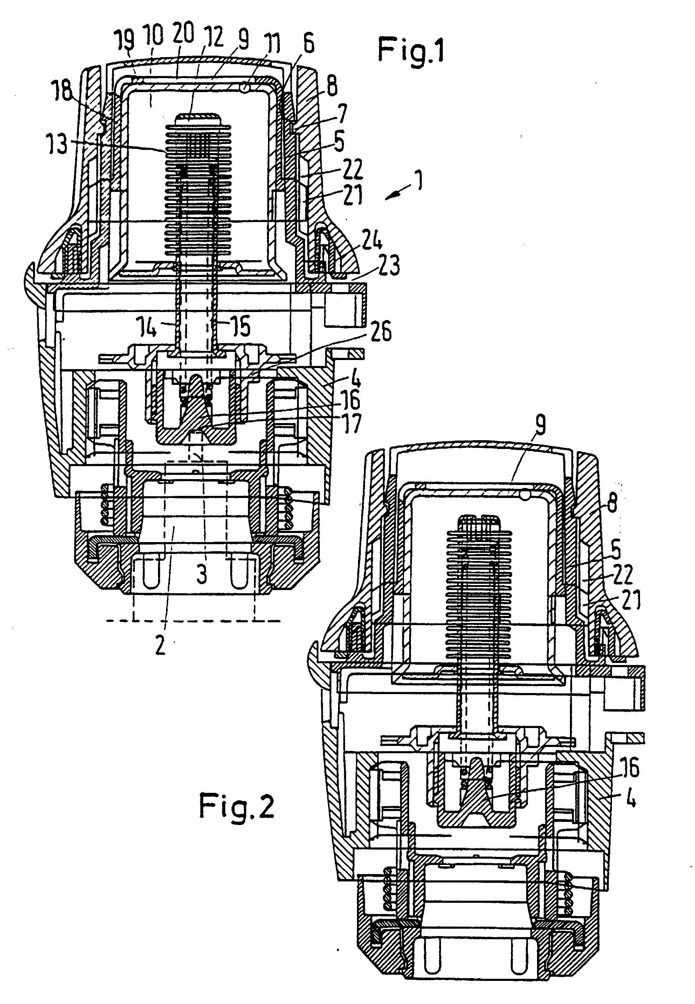

A thermostatic valve top part 1, as shown in Fig. 1, is mounted on an operating connector 2 of a radiator valve, shown only with dotted lines, here acting upon a tappet 3, which operates the real radiator valve 2. The further the tappet 3 is pushed inwards, the further the radiator valve is throttled. This also applies when the valve does not control a radiator but another sort of heating device, for example a floor heating system.

For reasons of clarity, the connector 2 and the tappet 3 are not shown in the remaining figures.

The thermostatic valve top part 1 has a housing 4, which in the embodiment shown extends substantially over the whole axial length of the thermostatic valve top part 1. In relation to the orientation of Fig. 1, a circumferential groove 6 is provided in the upper part 5 of the housing, in which a circumferential projection 7 of a twist handle 8 engages. Thus, the twist handle 8 is rotatable in relation to the housing 4, 5, but axially unmovably supported.

The thermostatic valve top part 1 also has a thermostatic element 9, which surrounds a hollow space 10, which again is closed by a ball 11. As known per se, the thermostatic element 9 has a recess 12, which is surrounded by a bellows-like wall 13. In the recess 12 a spindle 14 is arranged, in whose hollow interior an overpressure spring 15 is arranged. The spring 15 is supported on the upper front side of the spindle 14. The other end of the spring 15 is supported on a cone 16, whose lower end forms a bearing surface 17 for the tappet 3.

By means of the force of a spring (not shown in detail), the tappet 3 is pushed outwards, that is, in Fig. 1 upwards. The spindle 14, however, is loaded by a counter force by the thermostatic element 9. When now the temperature increases, the filling in the hollow space 10 expands and pushes the spindle 14 downwards, which again transmits its forces via the pressure spring 15 to the cone 16 and thus also to the tappet 3. Thus, the cone 16 forms an operating element, whereas the spindle 14 and the pressure spring 15 form a connecting element.

At its upper half, the thermostatic element 9 is surrounded by a barrel-like cage, which in the following is called transport element 18. The transport element 18 surrounds the thermostatic element 9 in the circumferential direction, however, only covers the front side of the thermostatic element 9 in an edge area 19. There between, the front side of the transport element has an opening 20. This "hole" is so big, that it leaves room for the ball 11. Thus, the ball 11 is not touched by the transport element 18, and cannot be pressed inwards by it. At least in the area of its front side, however, the material of the transport element is so strong that the ball 11 does not project from it.

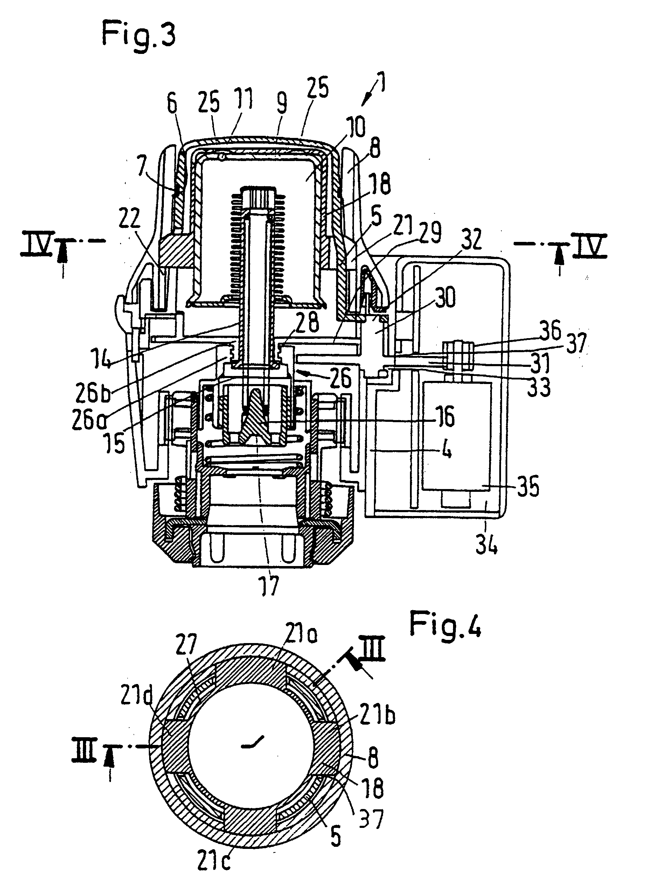

Several radially extending fingers 21, forming together an external thread, are distributed on the transport element 18 in the circumferential direction. On the inside of the twist handle, a number of spiral-shaped grooves 22, corresponding to the number of fingers 21, is formed, which engage with the fingers 21. In this connection, the fingers are supported, as will be explained later by way of Fig. 4, in slots 37, which are formed in the upper part 5 of the housing 4. Thus, the thermostatic element 9 is held unrotatably in the housing 4. When, however, the twist handle 8 is turned in relation to the housing 4, the cooperation between the fingers 21 and the grooves 22 will cause the thermostatic element 9 to move upwards or downwards. When moving downwards, the desired value, at which the heating valve is throttled by means of its tappet 3, is reduced. When the thermostatic element is moved upwards, the desired value is increased. To clarify the increase and decrease, Fig. 1 shows the position of the thermostatic element 9 for a desired value of 30°C. This is one extreme position of the thermostatic element 9. Fig. 2 shows the other extreme position for a minimum desired value of 12°C.

In spite of the adjustment of the desired value, the axial length of the thermostatic valve top part 1 remains unchanged. Accordingly, also the axial orientation of the twist handle 8 in relation to the housing 4,5 is unchanged. The width of a slot 23 between the twist handle 8 and the housing 4 remains constant, so that it is easier to securely retain rotation angle limiting elements 24, shown schematically, in the twist handle 8 in all imaginable rotation angle positions.

Fig. 3 shows an alternative embodiment of a thermostatic valve top part 1, in which identical or corresponding parts have the same reference numbers.

Deviations appear in the embodiment of the transport element 18. Its front side is closed. However, a circumferential groove 25 is provided, which leaves room for the ball 11. Also in this embodiment the thermostatic element can be inserted in the transport element in any rotation position, without risking that the ball 11 is pressed inwards.

Fig. 4 shows a sectional view IV-IV according to Fig. 3. From this it can be seen that the centres of the fingers 21, which, for the purpose of differentiation, are called 21a to d, are offset 90° in relation to each other. Thus, the centres of the fingers 21a to 21d are rotation symmetrical. However, the finger 21a has a larger width than the other fingers 21b to 21d. Therefore, it is only possible to assemble these parts in one angle position of transport element 18, housing top part 5 and twist handle 8. This simplifies a series production, in which many similar thermostatic valve top parts are produced, in which it must be ensured that in all thermostatic valve top parts a predetermined twist handle angle position must correspond to a predetermined desired value. This alignment occurs in that the cone 16 is twisted in its holding device 26. The cone 16 and the holding device 26 are connected with each other via a thread, so that a twisting will cause a length change of the connecting element 14, 15. In order not to make this length change to large, it is provided that the thermostatic element 9 with its transport element 18, the housing 4, 5 and the twist handle 8 can only be assembled in one predetermined angle orientation. In this case, only the component tolerances in relation to each other must be considered. However, no additional tolerances occur because of different assembling positions.

From Fig. 4 it can also be seen that the individual fingers 21a to 21d are connected with each other in the circumferential direction via a ring 27. This increases the stability of the transport element 18 and prevents the fingers 21 from exerting larger forces on the thermostatic element 9.

The thermostatic valve top part 1 according to Fig. 3 has an additional feature, which is not shown in the Figs. 1 and 2.

The holding device 26, into which the operating element 16 is screwed, is divided in two. A first part 26a is connected with a second part 26b via a thread 28. Thus, when the two parts 26a and 26b are turned in relation to each other, the length of the connecting element 14, 15 between the transport element 18 and the operating element 16 and thus also the active connection between the thermostatic element 9 and the operating element 16 changes. The larger the distance between the operating element 16 and the transport element 18, the earlier the radiator valve is throttled at unchanged temperature.

The second part 26b of the holding device 26 is made in one piece with a gear wheel 29, which meshes with a pinion 30, which again is made in one piece with an inlet gear wheel 31. The unit pinion 30, inlet gear wheel 31 is supported in the housing 4 by way of a bearing neck 32, in the area of the edge of the housing. Thus the inlet gear wheel 31 can have a relatively large diameter. However, the inlet gear wheel 31 then also projects from the housing 4 through a slot 33.

Laterally on the housing 4 is fitted a control device 34, which is detachably connected with the housing 4. The control device 34 has a motor 35, made as a battery-operated electric motor. The motor 35 has an outlet pinion 36, which meshes with the inlet gear wheel 31. For this purpose, the inlet gear wheel 31 projects into the control device 34 through a slot 37.

The first part 26a of the holding device 26 is (in a way not shown in detail) mounted unrotatably in the housing 4. When now the motor 35 is activated, it drives the second half 26b of the holding device 26 via the gear wheel drive 26, 31, 30, 29, so that the part 26b is turned in relation to the first part 26a. Under the force of the pressure spring 15, the spindle 14 is held at the lower end of the second part 26b, thus following the movement of this part 26b. If the inlet gear wheel 29 and thus also the second part 26b are turned clockwise, the distance between the front side of the spindle 14 and the cone 16 is reduced, and the desired temperature increases. In the opposite case, the desired temperature decreases, as the distance is increased.

## Claims

1. Thermostatic valve top part (1) with a housing (4), a twist handle (8) and a thermostatic element (9), which acts upon an operating element (16) via a connecting element (14, 15), the thermostatic element (9) being axially displaceable in relation to the housing (4) on a turning of the twist handle (8), **characterised in that** the twist handle (8) and thermostatic element (9) are configured such that, on a rotation of the twist handle (8) the thermostatic element (9) is axially displaceable also in relation to the twist handle (8).

2. Thermostatic valve top part according to claim 1, **characterised in that** the twist handle (8) and the housing (4) are fixed in relation to each other in the axial direction.

3. Thermostatic valve top part according to claim 1 or 2, **characterised in that** the thermostatic element (9) is inserted in a transport element (18), which is part of a drive device.

4. Thermostatic valve top part according to one of the claims 1 to 3, **characterised in that** several fingers (21) project radially outwards from the thermostatic element (9), said fingers (21) meshing with spiral shaped grooves (22) on the twist handle (8).

5. Thermostatic valve top part according to claim 4, **characterised in that** the fingers (21) are guided through substantially axially extending slots (37) in the housing (4).

6. Thermostatic valve top part according to claim 4 or 5, **characterised in that** the fingers (21) are designed to be rotation unsymmetrical.

7. Thermostatic valve top part according to one of the claims 4 to 6, **characterised in that** the centres of the fingers (21) are placed at regular distances in the circumferential direction, the fingers (21), however, having different widths.

8. Thermostatic valve top part according to one of the claims 4 to 7, **characterised in that** at least three fingers (21) are provided.

9. Thermostatic valve top part according to one of the claims 4 to 8, **characterised in that** the fingers (21) are connected with each other in the circumferential direction.

10. Thermostatic valve top part according to one of the claims 3 to 9, **characterised in that** the front side of the transport element (18) turning away from the valve has a free space with an annular limitation.

11. Thermostatic valve top part according to one of the claims 3 to 10, **characterised in that** the free space is a hole (20).

12. Thermostatic valve top part according to one of the claims 3 to 11, **characterised in that** the free space is formed by a circumferential groove (25) in the front side.

13. Thermostatic valve top part according to one of the claims 1 to 12, **characterised in that** an adjustment device (26a, 26b) is arranged between the thermostatic element (9) and the operating element (16), which device (26a, 26b) changes the active connection between the thermostatic element (9) and the operating element (16).

14. Thermostatic valve top part according to claim 13, **characterised in that** the adjustment device (26a, 26b) changes the length of the connecting element (14).

15. Thermostatic valve top part according to claim 13 or 14, **characterised in that** the adjustment device (26a, 26b) is connected with a control device (34), which is detachably fitted on the side of the housing (4).

16. Thermostatic valve top part according to one of the claims 13 to 15, **characterised in that** the adjustment device (26a, 26b) has a toothed gearing, whose inlet gear wheel (31), supported in the housing, projects from the housing (4) into the control device (34).

## Patentansprüche

1. Thermostatventilaufsatz (1) mit einem Gehäuse (4), einem Drehgriff (8) und einem Thermostatelement (9), das über ein Verbindungselement (14, 15) auf ein Betätigungselement (16) wirkt, wobei das Thermostatelement (9) bei einer Drehung des Drehgriffs (8) axial relativ zum Gehäuse (4) verlagerbar ist, **dadurch gekennzeichnet, daß** der Drehgriff (8) und das Thermostatelement (9) so konfiguriert sind, dass das Thermostatelement (9) bei der Drehung des Drehgriffs (8) auch relativ zum Drehgriff (8) axial verlagerbar ist.

2. Thermostatventilaufsatz nach Anspruch 1, **dadurch gekennzeichnet, daß** der Drehgriff (8) und das Gehäuse (4) in Axialrichtung relativ zueinander festgelegt sind.

3. Thermostatventilaufsatz nach Anspruch 1 oder 2, **dadurch gekennzeichnet, daß** das Thermostatelement (9) in einem Transportelement (18) eingesetzt ist, das Teil einer Antriebseinrichtung bildet.

4. Thermostatventilaufsatz nach einem der Ansprüche 1 bis 3, **dadurch gekennzeichnet, daß** mehrere Finger (21) radial nach außen vom Thermostatelement (9) abstehen, die mit schraubenlinienförmigen Nuten (22) am Drehgriff (8) in Eingriff stehen.

5. Thermostatventilaufsatz nach Anspruch 4, **dadurch gekennzeichnet, daß** die Finger (21) durch im wesentlichen axial verlaufende Schlitze (37) im Gehäuse (4) geführt sind.

6. Thermostatventilaufsatz nach Anspruch 4 oder 5, **dadurch gekennzeichnet, daß** die Finger (21) rotationsunsymmetrisch ausgebildet sind.

7. Thermostatventilaufsatz nach einem der Ansprüche 4 bis 6, **dadurch gekennzeichnet, daß** die Mitten der Finger (21) in regelmäßigen Abständen in Umfangsrichtung verteilt sind, aber die Finger (21) unterschiedliche Breiten aufweisen.

8. Thermostatventilaufsatz nach einem der Ansprüche 4 bis 7, **dadurch gekennzeichnet, daß** mindestens drei Finger (21) vorgesehen sind.

9. Thermostatventilaufsatz nach einem der Ansprüche 4 bis 8, **dadurch gekennzeichnet, daß** die Finger (21) in Umfangsrichtung miteinander verbunden sind.

10. Thermostatventilaufsatz nach einem der Ansprüche 3 bis 9, **dadurch gekennzeichnet, daß** das Transportelement (18) an seiner dem Ventil abgewandten Stirnseite einen Freiraum mit einer ringförmigen Begrenzung aufweist.

11. Thermostatventilaufsatz nach einem der Ansprüche 3 bis 10, **dadurch gekennzeichnet, daß** der Freiraum durch ein Loch (20) gebildet ist.

12. Thermostatventilaufsatz nach einem der Ansprüche 3 bis 11, **dadurch gekennzeichnet, daß** der Freiraum durch eine umlaufende Nut (25) in der Stirnseite gebildet ist.

13. Thermostatventilaufsatz nach einem der Ansprüche 1 bis 12, **dadurch gekennzeichnet, daß** zwischen dem Thermostatelement (9) und dem Betätigungselement (16) eine Verstelleinrichtung (26a, 26b) angeordnet ist, die den Wirkzusammenhang zwischen dem Thermostatelement (9) und dem Betätigungselement (16) ändert.

14. Thermostatventilaufsatz nach Anspruch 13, **dadurch gekennzeichnet, daß** die Verstelleinrichtung (26a, 26b) die Länge des Verbindungselements (14) verändert.

15. Thermostatventilaufsatz nach Anspruch 13 oder 14, **dadurch gekennzeichnet, daß** die Verstelleinrichtung (26a, 26b) mit einem Steuergerät (34) verbunden ist, das lösbar seitlich am Gehäuse (4) befestigt ist.

16. Thermostatventilaufsatz nach einem der Ansprüche 13 bis 15, **dadurch gekennzeichnet, daß** die Verstelleinrichtung (26a, 26b) ein Zahnradgetriebe aufweist, dessen im Gehäuse (4) gelagertes Eingangszahnrad (31) aus dem Gehäuse (4) heraus- und in das Steuergerät (34) hineinragt.

## Revendications

1. Partie supérieure (1) d'une soupape thermostatique avec un boîtier (4), une poignée tournante (8) et un élément thermostatique (9), qui agit sur un élément opérant (16) via un élément de raccordement (14,15), l'élément thermostatique (9) étant déplaçable axialement par rapport au boîtier (4) sur rotation de la poignée tournante (8), **caractérisée en ce que** la poignée tournante (8) et l'élément thermostatique (9) sont configurés de telle sorte que sur une rotation de la poignée tournante (8) l'élément thermostatique (9) est déplaçable axialement également par rapport à la poignée tournante (8).

2. Partie supérieure d'une soupape thermostatique selon la revendication 1, **caractérisée en ce que** la poignée tournante (8) et le logement (4) sont fixés l'un par rapport à l'autre dans la direction axiale.

3. Partie supérieure d'une soupape thermostatique selon la revendication 1 ou 2, **caractérisée en ce que** l'élément thermostatique (9) est inséré dans un élément de transport (18) qui fait partie d'un dispositif d'entraînement.

4. Partie supérieure de soupape thermostatique selon l'une des revendications 1 à 3, **caractérisée en ce que** plusieurs doigts (21) font saillie radialement vers l'extérieur à partir de l'élément thermostatique (9), lesdits doigts (21) s'engrenant avec les gorges spiroïdales (22) sur la poignée tournante (8).

5. Partie supérieure de soupape thermostatique selon la revendication 4, **caractérisée en ce que** les doigts (21) sont guidés à travers des fentes (37) s'étendant sensiblement axialement dans le logement (4).

6. Partie supérieure de soupape thermostatique selon la revendication 4 ou 5, **caractérisée en ce que** les doigts (21) sont conçus de façon à être asymétriques à la rotation.

7. Partie supérieure de soupape thermostatique selon l'une des revendications 4 à 6, **caractérisée en ce que** les entraxes des doigts (21) sont placés à des distances régulières dans la direction circonférentielle, les doigts (21) ayant, toutefois, des largeurs différentes.

8. Partie supérieure de soupape thermostatique selon l'une des revendications 4 à 7, **caractérisée en ce qu'**il est prévu au moins trois doigts (21).

9. Partie supérieure de soupape thermostatique selon l'une des revendications 4 à 8, **caractérisée en ce que** les doigts (21) sont raccordés entre eux dans la direction circonférentielle.

10. Partie supérieure de soupape thermostatique selon l'une des revendications 3 à 9, **caractérisée en ce que** le côté avant de l'élément de transport (18) se détournant de la soupape présente un espace libre avec une limitation annulaire.

11. Partie supérieure de soupape thermostatique selon l'une des revendications 3 à 10, **caractérisée en ce que** l'espace libre est un trou (20).

12. Partie supérieure de soupape thermostatique selon l'une des revendications 3 à 11, **caractérisée en ce que** l'espace libre est formé par une gorge circonférentielle (25) dans le côté avant.

13. Partie supérieure de soupape thermostatique selon l'une des revendications 1 à 12, **caractérisée en ce qu'**un dispositif d'ajustement (26a,26b) est disposé entre l'élément thermostatique (9) et l'élément opérant (16), lequel dispositif (26a,26b) modifie le raccordement actif entre l'élément thermostatique (9) et l'élément opérant (16).

14. Partie supérieure de soupape thermostatique selon la revendication 13, **caractérisée en ce que** le dispositif d'ajustement (26a,26b) modifie la longueur de l'élément de raccordement (14).

15. Partie supérieure de soupape thermostatique selon la revendication 13 ou 14, **caractérisée en ce que** le dispositif d'ajustement (26a,26b) est raccordé à un dispositif de commande (34) qui est monté de façon amovible sur le côté du logement (4).

16. Partie supérieure de soupape thermostatique selon l'une des revendications 13 à 15, **caractérisée en ce que** le dispositif d'ajustement (26a,26b) comporte un engrenage denté dont la roue d'engrenage d'entrée (31), supportée dans le logement, fait saillie à partir du logement (4) jusque dans le dispositif de commande (34).
